# EUROPEAN PATENT SPECIFICATION

(11) **EP 0 580 194 B1**
(45) Date of publication and mention of the grant of the patent: **24.01.1996**
(21) Application number: 93201666.0
(22) Date of filing: 10.06.1993
(51) Int. Cl.: B01F 17/12

(54) **Use of water-soluble dispersant agents obtained by sulfonating indene or indene mixtures with aromatics**
Verwendung wasserlöslicher Dispergiermittel, hergestellt durch Sulfonieren von Inden oder Gemischen von Inden mit Aromaten
Utilisation d'agents dispersant hydrosolubles, obtenus par sulfonation d'indène ou de mélanges d'indène et de composès aromatiques

(30) Priority: 11.06.1992 IT MI921433
(43) Date of publication of application: 26.01.1994
(73) Proprietor: ENIRICERCHE S.p.A., I-20121 Milan (IT); SNAMPROGETTI S.p.A., I-20121 Milan (IT)
(72) Inventor: Marcotullio, Armando, I-20097 San Donato Milanese, Milan (IT); Corno, Carlo, I-20097 San Donato Milanese, Milan (IT); Donati, Elio, I-61032 Fano, Pesaro (IT)
(74) Representative: Fusina, Gerolamo

(56) References cited:
- EP-A- 0 172 543
- EP-A- 0 379 749
- EP-A- 0 450 201
- US-A- 4 541 965
- US-A- 4 623 359
- CHEMICAL ABSTRACTS, vol. 110, no. 23, 5 June 1989, Columbus, Ohio, US; abstract no. 212358n, page 705 ;

## Description

The present invention relates to the use of sulfonated products obtained by sulfonating indene or indene mixtures with aromatic compounds, as salts, as fluidifiers for concentrated coal water mixtures and as super-fluidifiers for concrete conglomerates.

Those skilled in the art are aware of the matter of fact that the most effective dispersants for concentrated coal water mixtures (CWM's) and concrete super-fluidifiers belong to the class of polymeric sulfonates.

For concentrated coal water mixtures, briefly referred to in the following as "CWM's", fluid and pumpable aqueous mixtures are meant which contain a coal level higher than 60%, with the maximal concentration which can be obtained with viscosity being the same, being a function of the type of coal and of its granulometric distribution.

A determining contribution to the rheological properties of CWM's is supplied by the dispersants which, by arranging themselves at coal-water interface, prevent the solid particles from coming into contact With each other. In such a way, the dispersants render homogeneous said mixtures and reduce their viscosity down to values which enable said mixtures to be pumped by means of conventional means.

When CWM's must be pumped along long distances, the rheological properties of the slurries should remain constant enough throughout the necessary time period; not always this requisite is met by all dispersant types.

As far as regards concretes, the addition of the so-said "super-fluidifiers" makes it possible added water amount to be reduced, with processability being the same, by at least 10-12%. Owing to their lower water content, the resulting structures display better mechanical properties.

As an alternative, with water/cement ratio being the same, the addition of super-fluidifier additives makes it possible the processability of the slurry to be improved, with a consequent increase in spreadout of at least 100%.

The same effects as produced by the super-fluidifiers on concrete, are obviously also obtained with cement mixtures and mortars, in particular as regards water saving.

For both these applications (concentrated coal water mixtures and cement mixtures) very effective are the salified polymeric sulfonates, among which naphthalene sulfonates condensed with formaldehyde, sulfonated melamines, sulfonated polystyrenes may be mentioned.

Furthermore, GB-A-2,159,536 claims products deriving from oxidative sulfonation of coke-oven tars with SO₃.

EP-A-422,222 discloses a water-soluble dispersant constituted by a copolymer of maleic anhydride and an indene-based composition.

A common problem shared by all of these dispersants applied in CWM field, is that sometimes they do not display, simultaneously and to a same extent, both of the desired properties. In other terms, some dispersants known from the prior art are good fluidifiers (in the sense that they considerably reduce the viscosity of freshly prepared slurries), but are not effective for the purpose of keeping the slurries fluid and pumpable for a certain time period.

For example, the condensates of naphthalene sulfonic acid with formaldehyde (briefly referred to in the following as "NAFC's"), are extremely good fluidifier agents, but sometimes, in particular for some coal types, they are not so much effective for the purpose of keeping the slurries fluid and pumpable for very long distances.

Other products, still belonging to the class of polymeric sulfonates, are more effective than NAFC's in order to keep CWM's fluid and pumpable over long time periods, but are less effective as fluidifiers.

NAFC's, and, in general, all sulfonates condensed with formaldehyde, display a further drawback deriving from the use, in order to prepare them, of formaldehyde, a well-known carcinogenic reactant. Chemical Abstracts, vol. 110, no.23, page 705, 5.6.1989, Abstract no. 212358n discloses sodium salts of indene and alkyl indene sulfonic acid, prepared by conversion of the corresponding Mg-salts into Na-salts, formulated in monomeric form. Such compounds posses hydrotropic activity.

The present invention aims at overcoming these drawbacks which affect the prior art, by means of the use of particular sulfonates obtained by treating with sulfuric trioxide indene and/or its alkyl derivatives and mixtures thereof With substrates prevailingly constituted by aromatic compounds containing two or more mutually fused rings.

In accordance therewith, a first object of the present invention relates to the use of water-soluble sulfonates of alkali metals or alkaline-earth metals or ammonium, obtained by neutralizing, with alkali metal or alkaline-earth metal oxides or hydroxides, or ammonium hydroxide, those mixtures of sulfonic acids which derive from the reaction, at a temperature comprised within the range of from 30 to 120°C, of sulfur trioxide with a composition constituted by:
-- indene and/or alkyl indenes, and
-- hydrocarbon mixtures constituted by at least 70% of aromatic hydrocarbons and their alkyl derivatives, with at least 75% of said aromatic hydrocarbons containing two or more mutually fused rings; with the weight ratio of sulfur trioxide to said composition being comprised within the range of from 0.8 to 2.2; and the total content of indene and/or indene alkyl derivatives being comprised within the range of from 20 to 100% by weight, relatively to the total weight of the composition submitted to sulfonation, as fluidifiers for concentrated coal/water mixtures and concrete conglomerates.

The ratio of SO₃ to the aromatic composition may be varied within the above range as a function of the characteristics of hydrophilicity of the desired product.

According to the preferred embodiment, the percent level of indene and/or its alkyl derivatives is comprised within the range of from 25 to 100%, and the weight ratio of SO₃:aromatic composition is comprised within the range of from 0.9 to 2.1.

With the term "alkyl indene" an indene is meant which is substituted, in any position thereof, with a C₁-C₃ alkyl radical. Indene and alkyl indenes may also be present in the prevailingly aromatic hydrocarbon mixture.

The sulfonation reaction is carried out in an inert solvent, e.g., sulfur dioxide, chlorinated or fluorinated solvents, preferably in sulfur dioxide, within a temperature range of from 30 to 120°C, preferably of from 40 to 110°C.

The sulfonation reaction time is a function of various parameters, in particular of reactant concentration and of the temperature range within which the reaction is carried out. The reaction time, comprising the reactants' contact time, is generally comprised within the range of from 20 minutes to about 4 hours.

When the reaction of the above composition with SO₃ is carried out under the above said temperature conditions, said reaction should not be regarded as being a simple sulfonation, i.e., the replacement of an aromatic hydrogen atom of the starting substrate with an -SO₃H radical, but a reaction leading to sulfonates of polymeric character. For exemplifying purposes, the reaction of SO₃ with pure indene yields a water-soluble sulfonate which is practically free from monomeric sulfonated indene, as also evidenced by the N.M.R. spectra.

The hydrocarbon mixture consisting of at least 70% of aromatic compounds and their alkyl derivatives, with at least 75% of said aromatic components containing two or more mutually fused rings, can derive from various origins, e.g., it may be a petroleum fraction or residue, or a derivative from coal processing.

According to the preferred embodiment, said hydrocarbon mixture is fuel oil from steam cracking.

By "fuel oil from steam cracking", the high boiling liquid residue is understood which derives from naphtha and/or gas oil cracking in order to yield light olefins, in particular ethylene. This fuel oil does not enjoy any valuable uses at commercial level and its price is computed on calory-basis.

Most ethylene production at world-wide level derives from gas oil and/or naphtha cracking in the presence of steam (see Ullmann's Encyclopedia of Industrial Chemistry Vol. A 10 Page 17).

The reaction byproducts are partially constituted by such gases as hydrogen, methane, acetylene, propane, and so forth, liquid fractions having a boiling point comprised within the range of from 28 to 205°C, and, finally, a high boiling residue, the so-said "steam cracking fuel oil".

This fuel oil is formed with variable yields according to the cracker operating conditions, but, above all, as a function of feed type. Typically, the yields of fuel oil from steam cracking are of 15-20% when gas oil is used as feedstock and 2-5% when feedstock is naphtha. Also the chemical composition slightly varies as a function of the above said parameters. In any cases, such a product contains not less than 70% of aromatic components, usually from 75 to 90%, as determined by column chromatography according to ASTM D 2549, with the balance to 100% being constituted by saturated components and polar components.

The aromatic portion of fuel oil from steam cracking is constituted by at least 75%, by aromatic and alkyl aromatic components containing two or more mutually fused rings.

At the end of the reaction between sulfur trioxide and indene containing aromatic composition, the sulfonated product is recovered according to well-known techniques in the art of water-soluble sulfonates.

The inert solvent is recovered, for example under reduced pressure, either by reducing pressure or by extraction, and the mixture of sulfonic acids is neutralized with oxides or hydroxides of alkali metals or alkaline-earth metals or ammonium hydroxide, preferably with sodium hydroxide, to a pH value of about 7-10.

In particular, if the solvent used is sulfur dioxide, the latter is recovered, for example by reducing pressure, and/or by fluxing with an inert gas, and the mixture of sulfonic acids is neutralized.

In the case when the inert solvent is a chlorinated solvent, this can be removed either before or after the neutralization, for example under reduced pressure or by extracting the sulfonate from the aqueous solution. The salified sulfonate obtained in the above disclosed process is used as a fluidifier agent in the fields of CWM's and cement as an aqueous solution, so as directly obtained from the above disclosed process, or as a solid material which can be obtained by removing water by means of such conventional techniques as evaporation or freeze-drying; however, the use is preferred of the aqueous solution, in the form as the latter is obtained from the sulfonation process.

The indenic dispersant obtained from the above disclosed process is constituted by an aqueous solution of a solid material containing the salified sulfonated dispersant at a level comprised within the range of from 40 to 80% by weight, with the residual matter being the corresponding alkali metal or alkaline-earth metal or ammonium sulfate and possibly sulfite. The total content of sulfates and possible sulfites can be reduced according to such well-known methods as dialysis or ultra-filtration.

The resulting salified indene sulfonate is an effective fluidifier for concentrated coal water mixtures and makes it possible such mixtures to be pumped over long distances.

In accordance therewith, a further object of the present invention relates to concentrated coal water mixtures which are fluid and pumpable over long distances, characterized in that they contain a certain percent level, by weight, of the indenic sulfonate disclosed hereinabove.

In order to obtain a CWM having the desired viscosity, the concentration of coal and the amount of dispersant are a function of the coal type and of its granulometric distribution, besides the quality of the fluidifier agent.

However, the amount of indene-based dispersant as disclosed above, which is necessary in order to turn a CWM into a fluid and pumpable one is generally comprised within the range of from 0.3 to 1.2% by weight, as referred to whole CWM weight, and preferably comprised within the range of from 0.4 to 1% by weight, with the above percent values being referred to the salified indenic sulfonate in pure form.

The concentrated coal water mixtures are prepared according to techniques which are well-known for those skilled in the art, as, e.g., disclosed in GB-A-2,154,471.

The indenic sulfonates according to the present invention can be profitably used as super-fluidifiers for concrete.

In accordance therewith, a further object of the present invention relates to a fluid concrete composition comprising water, cement and inerts, with the weight ratio of water to cement being comprised within the range of from 0.3:1 to 0.7:1, and with the ratio of cement to inerts being comprised within the range of from 1:3 to 1:6 by weight, characterized in that said composition contains an amount of indenic sulfonate in salt form comprised within the range of from 0.2 to 3% by weight, relatively to the weight of cement.

According to the preferred embodiment of the present invention, the weigth ratio of water to cement is comprised within the range of from 0.35:1 to 0.55:1, the weight ratio of cement to inerts is comprised within the range of from 1:3.5 to 1:5.5 and the concentration of sulfonated indenic additive in salt form is comprised within the range of from 0.3 to 2.0% by weight, relatively to the weight of cement.

When the concrete compositions according to the present invention are prepared, the normal hydraulic cement, for example Portland cement, may be used, and the normal inerts can be sand and gravel.

The compositions of the present invention may also contain an antifoaming agent, in particular in the case when one wishes to reduce the porosity of concrete.

For that purpose, the usual siliconic derivatives, alcohols and fatty acids may be used in amounts of up to 10% by weight, relatively to the sulfonated indenic derivative.

The following examples are reported in order to better illustrate the present invention.

### Example 1

For the reaction, a stainless steel, pressure resistant autoclave is used, equipped with stirring means and provided with means for heat exchange, temperature detection, reactants feed and reaction products discharge means.

112.8 grams of indene is charged to the autoclave, the autoclave is purged with nitrogen and then 800 grams of liquid sulfur dioxide is charged.

To the autoclave, kept with stirring, 233 grams of liquid sulfur trioxide is fed during approximately 30 minutes. During this time period, the increase of temperature, which from the initial value of 17°C increases up to a maximum value of 34°C, is controlled by circulating water inside the coil of the autoclave.

The autoclave is then heated, during approximately 30 minutes, up to 100°C, and temperature is kept comprised within the range of from 100 to 111°C for approximately 30 minutes.

At the end stirring is discontinued, and sulfur dioxide is started to be vented off with pressure being decreased down to room value, and during this step temperature decreases down to approximately 60 °C. The autoclave is then purged with nitrogen in order to remove the last traces of sulfur dioxide and subsequently is kept under vacuum for 30 minutes. Then, aqueous sodium hydroxide is added until the pH value of the resulting solution is adjusted at approximately 8.5. The amount of sodium hydroxide added is of 128 grams (647.3 grams of an aqueous solution at 19.77% by weight).

The autoclave is washed with water and in that way 3,001 grams of an aqueous solution is obtained which contains 219 grams of organic sulfonate and 155 grams of sodium sulfate and sulfite.

### Example 2

The process is carried out as in above Example 1, by starting from 190.7 grams of indene, 820 grams of sulfur dioxide and 197 grams of sulfur trioxide, with the reaction mixture temperature increasing, during the addition of SO₃ -- which takes place during a time period of 30 minutes -- from 17°C up to a maximal value of 32°C. The reaction mixture is then heated from 32°C up to 100°C during a time period of 32 minutes, then, as an end step, is kept at 100-113°C, for a 30-minute time. The reaction mixture is then neutralized with 549.1 grams of an aqueous solution of NaOH at 19.77% by weight, and is washed with water.

In that way, 2,620.3 grams of an aqueous solution is obtained which contains 348.3 grams of organic sulfonate and 71.5 grams of sodium sulfate and sulfite.

### Example 3

The process is carried out as in above Example 1, by starting from 136.4 grams of indene, 720 grams of sulfur dioxide and 209 grams of sulfur trioxide, with the reaction mixture temperature increasing, during the addition of SO₃ -- which takes place during a time period of 37 minutes -- from 9°C up to a maximal value of 39°C. The reaction mixture is then heated from 39°C up to 100°C during a time period of 32 minutes, then, as an end step, is kept at 100-110°C, for a 30-minute time. The reaction mixture is then neutralized to a pH value of about 8 with an aqueous solution of NaOH and is washed with water.

In that way, 2,342 grams is obtained of an aqueous solution which contains 273 grams of sodium sulfonate and 104 grams of sodium sulfate and sulfite.

### Example 4

The process is carried out as in Example 1, by starting from a mixture constituted by 151.8 grams of indene, 740 grams of sulfur dioxide and 232.3 grams of sulfur trioxide. Sulfur trioxide is added to the aromatic mixture during 38 minutes, during which the reaction mixture temperature increases from the initial value of 16°C up to 32°C. When the addition of SO₃ is complete, the reaction mixture is kept at 25-32°C for 30 minutes.

The reaction product is then neutralized with aqueous sodium hydroxide to pH 7.5; the reactor is washed with water and the reaction mixture is filtered with 10.5 grams of a water insoluble product being obtained.

At the end, 2,850 grams is obtained of an aqueous solution containing 263 grams of salified sulfonated product and 221 grams of sodium sulfate and sulfite.

### Example 5

The process is carried out as in Example 1, by starting from 201 grams of indene, 780 grams of sulfur dioxide and 207 grams of sulfur trioxide.

The latter is added during 26 minutes, during which the reaction mixture temperature increases from the initial value of 13°C up to a maximum of 37°C.

The reaction mixture is then heated up to 70°C during a 24-minute time and is kept at that temperature for 30 minutes.

After solvent removal, the reaction mixture is adjusted at pH 8.5 with an aqueous solution of NaOH, and then is filtered.

At the end, 2,404 grams is obtained of an aqueous solution containing 263 grams of salified sulfonate and 186 grams of sodium sulfate and sulfite.

### Example 6

The process is carried out as in Example 1. A mixture is sulfonated which consists of 153.4 grams of steam cracking fuel oil and 59.7 grams of indene (72% fuel oil, 28% indene).

The above said fuel oil, coming from the steam cracker of Priolo contains 88% of aromatic fractions. The above said aromatic fraction is constituted by approximately 81% by aromatic products containing two or more mutually fused rings.

Furthermore, the steam cracking fuel oil displays the following characteristics:
Density at 15°C = 1.09406 g/ml
Viscosity at 50°C = 177.1 cSt.

| DISTILLATION CURVE at 10 mmHg | | | |
|---|---|---|---|
| | Temperatures ºC | | |
| | Head under reduced pressure | Head at atmospheric pressure | Bottom |
| Initial point | 87 | 212 | 117 |
| 1% | 90 | 215 | 118 |
| 2% | 92 | 218 | 119 |
| 5% | 95 | 222 | 121 |
| 10% | 98 | 225 | 125 |
| 20% | 106 | 235 | 140 |
| 30% | 124 | 257 | 166 |
| 40% | 163 | 304 | 211 |
| 50% | 199 | 347 | 253 |
| 60% | 230 | 384 | 305 |
| 70% | 259 | 417 | 346 |
| 80% | 275 | 436 | 382 |

The above said mixture is diluited with 330 grams of sulfur dioxide and is sulfonated with 216 grams of SO₃.

The addition of sulfur trioxide is carried out during 33 minutes (temperature from the initial value of 14°C up to a maximum of 37°C); the reaction mixture is subsequently heated up to approximately 100°C during 37 minutes and is kept at that temperature for 30 minutes.

After removing SO₂, the reaction mixture is neutralized with an aqueous solution of NaOH, and an aqueous solution is obtained which contains 328.6 grams of sulfonate in salt form and 123.4 grams of sodium sulfate and sulfite.

### Example 7

The process is carried out as in Example 1. A mixture is submitted to sulfonation which is constituted by 80 grams of steam cracking fuel oil and 132.3 grams of indene (38% steam cracking fuel oil and 62% indene).

The above said mixture is diluited with 320 grams of SO₂ and sulfonated with 218 grams of sulfur trioxide.

The addition of sulfur trioxide is carried out during 40 minutes (temperature from 12 up to 33°C); the reaction mixture is subsequently heated up to about 100°C during a 29-minute time and is kept at that temperature for 30 minutes.

After removing SO₂, the reaction mixture is neutralized up to a pH value of 8.5 with an aqueous solution of NaOH at 20.85%, and 2,370 grams is obtained of an aqueous solution containing 308 grams of sulfonate in salt form and 145 grams of sodium sulfate and sulfite.

### Comparison Example 8

The process is carried out as in Example 1. The same steam cracking fuel oil as used in the preceding tests is submitted to sulfonation.

216.1 grams of steam cracking fuel oil is diluited with 250 grams of SO₂ and the resulting mixture is sulfonated with 216 grams of SO₃ fed during a 68-minute time (an increase in temperature from the initial value of 15°C up to a maximal value of 34°C is experienced); the reaction mixture is then heated up to 96°C during 37 minutes. The reaction mixture is then kept at about 100°C for 30 minutes.

After removing SO₂, the reaction mixture is neutralized with an aqueous solution of NaOH at 20.6%.

2,508 grams is obtained of an aqueous solution containing 383.2 grams of sulfonate in salt form and 68.6 grams of sodium sulfite and sulfate.

### Comparison Example 9

The process is carried out as disclosed in Example 1. The same fuel oil from steam cracking is submitted to sulfonation in this example too.

212.8 grams of steam cracking fuel oil is diluited with 230 grams of SO₂ and is sulfonated with 212.4 grams of SO₃ fed during a 60-minute time (an increase in temperature from the initial value of 14°C up to a maximal value of 34°C is experienced); the reaction mixture is then heated up to 78°C during 35 minutes. The reaction mixture is then kept at that temperature for 30 minutes.

After removing SO₂, the reaction mixture is neutralized with an aqueous solution of NaOH at 18.5%.

2,781 grams is thus obtained of an aqueous solution containing 359.5 grams of sulfonate in salt form and 64.7 grams of sodium sulfite and sulfate.

### ¹H-N.M.R. analysis

In order to confirm that indene polymerization actually took place yielding a water-soluble sulfonated polyindene, the ¹H-N.M.R. analysis was carried out by dissolving in deuterated water the reaction products from Examples 1 and 2.

The width of the lines of the accompanying spectra is indicative of occurred polymerization.

The ratio of aromatic protons (region comprised between 5.6 and 8.6 ppm) to aliphatic protons (region comprised within 0.6 to 4.3 ppm) is of about 1, and, in particular, is higher than 1 for the sample from Example 1 and is lower than 1 for the sample from Example 2; this difference is probably due to the different sulfonation level.

In any cases, this ratio between said two proton types is far away from the ratio of the monomer, i.e., 6:2, and this is a further confirmation that the polymerization to sulfonated polyindene took place.

### Molecular weight determination

The molecular weight of the products from Examples 1 and 2 was determined by gel permeation in aqueous phase, using two coupled detectors, i.e., Refractive Index and Differential Viscometer.

The latter detector and the relevant software make it possible an universal calibration line to be built according to Benoit, by on-line measuring the inherent viscosity of the species which elute from the set of chromatographic columns.

The experimental apparatus is constituted by a Jasco PU 880 pumping system, a Rheodyne 7125 manual injector, a Refractive Index/Differential Viscometer double detector Viscotek 200, a Viscotek UNICAL aquisition and processing software.

WAters Ultra Hydrogel 250 + 120 columns, equipped with pre-column, are used.

The eluting media is constituted by 80:20 0.1 M sodium sulfate:dimethyl sulfoxide, at a flow rate of 0.8 ml/minute.

The system is calibrated with 5 sulfonated polystyrene standards having molecular weights comprised between 88,000 and 4,000.

After calibrating the system, the indene sulfonate samples from Examples 1 and 2, dissolved in the mobile phase, are analyzed.

Indene sulfonate of Example 1 resulted to have an M_{w} of 46,800 and an Mₙ of 3,210; whereas the indene sulfonate from Example 2 resulted to have an M_{w} of 36,600 and an Mₙ of 3,650.

These data, together with those resulting from ¹H-N.M.R. analysis inequivocally demonstrate that the process of the present invention must not be just considered as a simple sulfonation, but should be regarded as a sulfonation accompanied by polymerization.

### Evaluation of CWM fluidifier properties

A coal is submitted to a dry pregrinding treatment in order to obtain granules with a maximal particle size of 3 mm. Then, mixtures are prepared from said pre-ground coal, water and an organic sulfonate from Examples 1-3. The organic sulfonate is contained in each mixture in an amount of 1% by weight.

These mixtures are submitted to moist grinding using the following grinding charge:
-- 3.2 kg of AISI 420 steel balls, diameter 31.75 mm;
-- 4.8 kg of AISI 420 steel balls, diameter 25.40 mm;
-- 3.2 kg of AISI 420 steel balls, diameter 12.70 mm;
-- 4.8 kg of AISI 420 steel balls, diameter 9.53 mm;
and a mill with internal size of 240 x 203 mm.

1.8 kg of each mixture is ground with a jar shaking speed of 70 revolutions per minute. The grinding is carried out for 2 hours, until the average diameter of the coal particles is reduced down to approximately 7-8 micrometer.

The end grinding is then carried out on a pin mill having the same internal size as of the micronizer. In this mill, the pre-ground coal (65%, by weight, of coal contained in the slurry), the previously produced micronized coal, and, possibly, further water, are charged, up to a total weight of 1.4 kg. The additive concentration is of 0.5% by weight, relatively to the end suspension.

The product coming from the pin mill is then submitted to an end mixing at about 20°C, in order to optimize its rheological characteristics. Such a mixing is carried out, on a laboratory scale, with a blade stirrer, at 450 revolutions per minute.

The viscosities of the slurries are determined by means of a rotational viscometer Contraves Rheomat 115 with a DIN 145 coupling, thermostatted at 20 ± 0.2°C. The rheological behaviour of the slurries was evaluated by measuring the apparent viscosity at 10 seconds⁻¹.

The phenomenon of slurry decay upon pumping (i.e., evaluation of the dynamic stability) is simulated by stirring 200 grams of slurry, thermostatted at 20°C, at 1,000 rpm, with a laboratory mixer manufactured by IKA-WERK, model KW20DZM, equipped with a stainless steel blade stirrer. As the end point of the decay test, a shear stress value at 10 seconds⁻¹ is selected which is approximately twice as high as the initial value. The necessary time in order to reach this value is taken as the pumping resistance index, or dynamic stability, of the slurry.

It should be observed that the high stirring speed (1,000 rpm) is only selected in order to accelerate the degradation process, therefore the obtained results must be considered for comparison purposes only, and do not represent the behaviour of the slurries under the operating pumping conditions.

The granulometric distribution of coal is measured by using a laser diffraction particle size analyzer.

In Table (I), the characteristics are reported of the slurries to which the sulfonated products disclosed in Examples from 1 to 9 were added, by using a Polish coat having the following characteristics (as measured on dry coal): volatile substances 30.5%; ashes 9.87%; and fixed coal (by difference) 59.98%. All these percent values are by weight.

The viscosity and pumping stability data are reported by comparing them to the characteristics which can be obtained by using, with the other conditions being the same, a commercial additive belonging to the class of sodium naphtalene sulfonates condensed with formaldehyde.

As regards the viscosity of the slurries, a lower than 1 ratio indicates a higher fluidifier power of the product according to the present invention, than of the commercial product.

A higher than 1 value of pumping stability indicates the superiority of the products according to the present invention as compared to the commercial product taken for reference.

**Table 1**

| Sample | Viscosity at 10 seconds⁻¹ | Pumping stability |
|---|---|---|
| Example 1 | 0.64 | 10.1 |
| Example 2 | 0.70 | 15.9 |
| Example 3 | 0.75 | 3.31 |
| Example 4 | 0.83 | 12.9 |
| Example 5 | 0.71 | 34.0 |
| Example 6 | 0.74 | 10.3 |
| Example 7 | 0.82 | 12.7 |
| Comparative Example 8 | 1.06 | 2.6 |
| Comparative Example 9 | 1.28 | 2.3 |

The data reported in Table 1 (Examples 1-7) demonstrate that the products according to the present invention are all better than the commercial products from both viewpoints of the fluidification of freshly prepared slurries and of keeping them fluid during pumping.

The CWM slurries prepared with different additives than of the present invention (Comparison examples 8 and 9) do not display the high values of pumping stability which are characteristic for indene containing sulfonates, and furthermore display a lower fluidity.

### Evaluation of super-fluidifier properties

### 1) Mini-slump tests

In order to evaluate the super-fluidifier properties of the above disclosed additives, mini-slump measurements were carried out on cement-water mixes.
Mixes of Portland 425 cement and water were prepared with a water:cement ratio of 0.32 and an additive concentration of 0.7% by weight, based on cement weight, and 0.04% by weight -- still based on cement weight -- of an antifoaming agent. The so prepared mixture was poured into a container having a cone frustum shape (base diameter = 71 mm, upper top diameter = 52 mm, height = 85 mm), and the spreading surface area after cone removal was determined.
The results are reported in following Table 2, in which also the slump value of the mix to which the additive had not been added, is reported.

**Table 2**

| Sample | Surface area, cm² |
|---|---|
| Blank | 38.5 |
| Example 1 | 530 |
| Example 2 | 482 |
| Example 3 | 466 |
| Example 4 | 463 |
| Example 5 | 495 |
| Example 6 | 452 |
| Example 7 | 511 |

### 2) Tests on concrete

The additives of Examples 4 and 5 of the present invention were evaluated for the fluidity of freshly prepared concrete and the mechanical properties of the built structure.
For each concrete preparation, the following formulation was used, in which the percent contents of super-fluidifier additive and antifoaming agent are both based on cement weight:

| | |
|---|---|
| -- sand 0-3 mm | 22.4 kg |
| -- gravel 6-25 mm | 22.4 kg |
| -- Portland 425 cement | 10 kg |
| -- super-fluidifier | 0.7% |
| -- antifoaming agent | 0.04% |
| -- water: the necessary amount in order to obtain the desired slump. | |

On fresh concrete the slump was measured and then concrete cubes were prepared by using moulds of cubical shape with 150 mm of side placed on a vibrating table, as provided for by UNI standards.

After a setting time of 24 hours, the cubical concrete bodies were de-moulded and were allowed to age in water during 28 days. On the so prepared cubes, the compression strength after 28 days, expressed as kg/cm², is measured. For comparison purposes, the data relevant to additive-free concrete and to concrete admixed with a commercial super-fluidifier belonging to the class of sodium naphthalene sulfonates condensed with formaldehyde are reported.

The data are reported in following Table 3, wherein W:C is the water/cement ratio:

**Table 3**

| Additive | W/C | Slump | Compression strength (after 28 days) |
|---|---|---|---|
| Without additive | 0.62 | 14.5 | 355 kg/cm² |
| Commercial additive | 0.52 | 14.5 | 469 kg/cm² |
| Example 4 | 0.53 | 15.0 | 477 kg/cm² |
| Example 5 | 0.52 | 14.5 | 449 kg/cm² |

The above data show that the additives according to the present invention are very effective super-fluidifier agents because, with fluidity being the same, they require decidedly smaller water amounts than additive-free concretes.

The above enables the built structures to display decidedly higher mechanical properties, comparable to those reached with the best commercial product.

Taken as their whole, the experimental data show that the product according to the present invention display extremely good CWM fluidifier properties, make it possible said CWM's to be pumped over long distances and are very good concrete super-fluidifier agents.

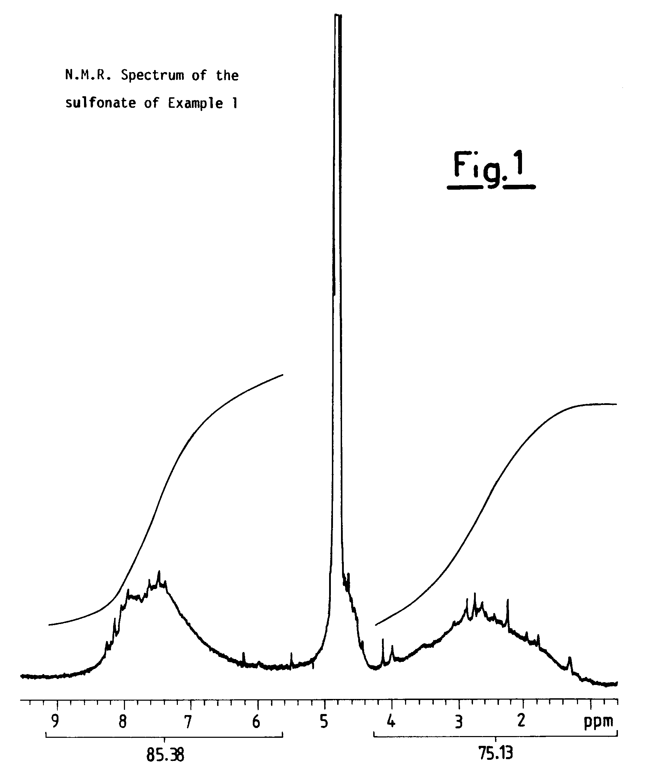

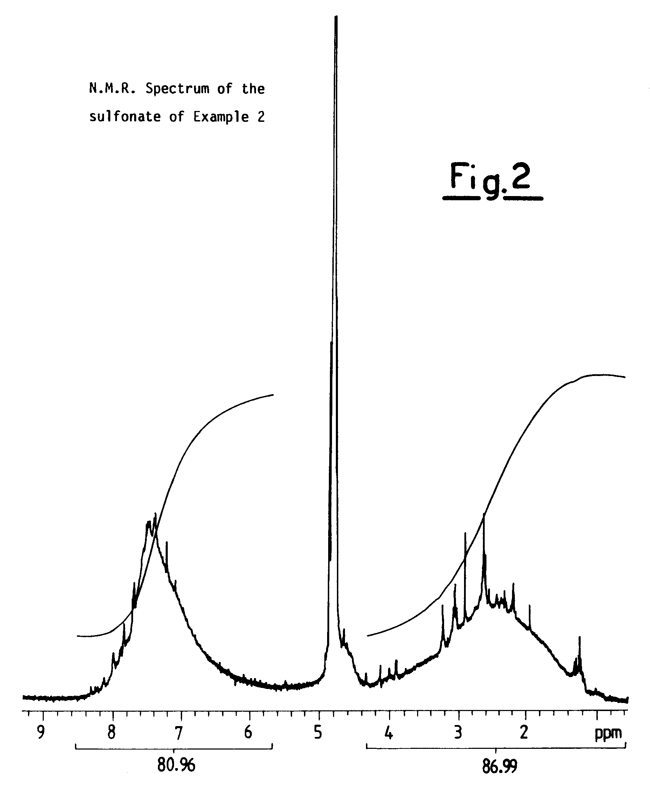

## Claims

1. Use of Water-soluble sulfonates of alkali metals or alkaline-earth metals or of ammonium obtained by neutralizing, with alkali metal or alkaline-earth metal oxides or hydroxides, or ammonium hydroxide, those mixtures of sulfonic acids which derive from the reaction, at a temperature comprised within the range of from 30 to 120°C, of sulfur trioxide with a composition constituted by:
-- indene and/or alkyl indenes, and
-- hydrocarbon mixtures constituted by at least 70% of aromatic hydrocarbons and their alkyl derivatives, with at least 75% of said aromatic hydrocarbons containing two or more mutually fused rings;
with the weight ratio of sulfur trioxide to said composition being comprised within the range of from 0.8 to 2.2; and the total content of indene and/or indene alkyl derivatives being comprised within the range of from 20 to 100% by weight, relatively to the total weight of the composition submitted to sulfonation, as fluidifiers for concentrate coal/water mixtures and concrete conglomerates.

2. Use of Sulfonates according to claim 1, in which the total content of indene and/or its alkyl derivatives is comprised within the range of from 25 to 100%, and the weight ratio of SO₃: sulfonable composition is comprised within the range of from 0.9 to 2.1.

3. Fluid, pumpable composition of coal in water, characterized in that it contains an amount of from 0.3 to 1.2% by weight of sulfonate according to claim 1.

4. Fluid, pumpable composition of coal in water according to claim 3, containing a sulfonate amount comprised within the range of from 0.4 to 1% by weight.

5. Fluid concrete composition comprising water, cement and inerts, with the weight ratio of water to cement being comprised within the range of from 0.3:1 to 0.7:1, and with the ratio of cement to inerts being comprised within the range of from 1:3 to 1:6 by weight, characterized in that said composition contains an amount of sulfonate according to claim 1 comprised within the range of from 0.2 to 3% by weight, relatively to the weight of cement.

6. Fluid concrete composition according to claim 5, in which the weigth ratio of water to cement is comprised within the range of from 0.35:1 to 0.55:1, the weight ratio of cement to inerts is comprised within the range of from 1:3.5 to 1:5.5 and the concentration of sulfonated indenic additive in salt form is comprised within the range of from 0.3 to 2.0% by weight, relatively to the weight of cement.

## Patentansprüche

1. Verwendung von wasserlöslichen Sulfonaten von Alkalimetallen oder Erdalkalimetallen oder von Ammonium, welche erhalten werden durch Neutralisieren mit Alkalimetall- oder Erdalkalimetalloxiden oder -hydroxiden oder Ammoniumhydroxid solcher Mischungen von Sulfonsäuren, die aus der Reaktion von schwefeltrioxid mit einer Zusammensetzung, gebildet durch:
- Inden und/oder Alkylindene, und
- Kohlenwasserstoffmischungen, bestehend aus mindestens 70 % aromatischen Kohlenwasserstoffen und ihren Alkylderivaten, wobei mindestens 75 % der aromatischen Kohlenwasserstoffe zwei oder mehrere miteinander verschmolzene Ringe aufweisen, bei einer Temperatur im Bereich von 30 bis 120°C stammen, wobei das Gewichtsverhältnis von Schwefeltrioxid zu der Zusammensetzung in einem Bereich von 0,8 bis 2,2 liegt und der Gesamtgehalt von Inden und/oder Indenalkylderivaten in einem Bereich von 20 bis 100 Gew.% liegt, bezogen auf das Gesamtgewicht der der Sulfonierung unterzogenen Zusammensetzung,
als Fluidisierungsmittel für konzentrierte Kohle/Wasser-Mischungen und Betonkonglomerate.

2. Verwendung von Sulfonaten nach Anspruch 1, worin der Gesamtgehalt von Inden und/oder dessen Alkylderivaten in einem Bereich von 25 bis 100 % liegt und das Gewichtsverhältnis von SO₃ : sulfonierbarer Zusammensetzung in einem Bereich von 0,9 bis 2,1 liegt.

3. Fluide pumpfähige Zusammensetzung von Kohle in Wasser, dadurch gekennzeichnet, daß sie eine Menge von 0,3 bis 1,2 Gew.% Sulfonat nach Anspruch 1 enthält.

4. Fluide pumpfähige Zusammensetzung von Kohle in Wasser nach Anspruch 3, welche eine Sulfonatmenge in einem Bereich von 0,4 bis 1 Gew.% aufweist.

5. Fluide Betonzusammensetzung, umfassend Wasser, Zement und inerte Substanzen wobei das Gewichtsverhältnis von Wasser zu Zement in einem Bereich von 0,3:1 bis 0,7:1 und das Verhältnis von Zement zu inerten Substanzen gewichtsmäßig in einem Bereich von 1:3 bis 1:6 liegt, dadurch gekennzeichnet, daß die Zusammensetzung eine Menge an Sulfonat nach Anspruch 1 enthält, welche in einem Bereich von 0,2 bis 3 Gew.%, bezogen auf das Gewicht des Zements, liegt.

6. Fluide Betonzusammensetzung nach Anspruch 5, in welcher das Gewichtsverhältnis von Wasser zu Zement in einem Bereich von 0,35:1 bis 0,55:1, das Gewichtsverhältnis von Zement zu inerten Substanzen in einem Bereich von 1:3,5 bis 1:5,5 liegt und die Konzentration an sulfoniertem Indenadditiv in Salzform in einem Bereich von 0,3 bis 2,0 Gew.%, bezogen auf das Gewicht des Zements, liegt.

## Revendications

1. Utilisation comme fluidifiant pour des mélanges concentrés de charbon et d'eau et pour des conglomérats de béton, de sulfonates de métaux alcalins ou de métaux alcalino-terreux ou d'ammonium, solubles dans l'eau, que l'on obtient en neutralisant par un oxyde ou hydroxyde de métal alcalin ou de métal alcalino-terreux, ou par de l'hydroxyde d'ammonium, les mélanges d'acides sulfoniques qui proviennent de la réaction, à une température comprise dans l'intervalle allant de 30°C à 120°C, du trioxyde de soufre avec une composition constituée :
- d'indène et/ou d'alkylindènes, et
- de mélanges d'hydrocarbures, constitués d'au moins 70% d'hydrocarbures aromatiques et de leurs dérivés alkylés, au moins 75% desdits hydrocarbures aromatiques contenant deux ou plus de deux noyaux condensés,
le rapport en poids du trioxyde de soufre à ladite composition étant compris dans l'intervalle allant de 0,8 à 2,2, et la proportion totale d'indène et/ou d'alkylindènes étant comprise dans l'intervalle allant de 20 à 100% en poids, par rapport au poids total de la composition soumise à la sulfonation.

2. Utilisation de sulfonates selon la revendication 1, pour laquelle la proportion totale d'indène et/ou de ses dérivés alkylés est comprise dans l'intervalle allant de 25 à 100%, et le rapport en poids du trioxyde de soufre SO₃ à la composition sulfonable est compris dans l'intervalle allant de 0,9 à 2,1.

3. Mélange de charbon et d'eau, fluide, pompable, caractérisé en ce qu'il contient une proportion de 0,3 à 1,2% en poids de sulfonate selon la revendication 1.

4. Mélange de charbon et d'eau, fluide, pompable, selon la revendication 3, contenant une proportion de sulfonate comprise dans l'intervalle allant de 0,4 à 1% en poids.

5. Composition de béton fluide, comprenant de l'eau, du ciment et des matières inertes, le rapport en poids de l'eau au ciment étant compris dans l'intervalle allant de 0,3:1 à 0,7:1 et le rapport en poids du ciment aux matières inertes étant compris dans l'intervalle allant de 1:3 à 1:6, caractérisée en ce qu'elle contient une proportion de sulfonate selon la revendication 1, comprise dans l'intervalle allant de 0,2 à 3% en poids, par rapport au poids du ciment.

6. Composition de béton fluide selon la revendication 5, dans laquelle le rapport en poids de l'eau au ciment est compris dans l'intervalle allant de 0,35:1 à 0,55:1, le rapport en poids du ciment aux matières inertes est compris dans l'intervalle allant de 1:3,5 à 1:5,5, et la concentration de l'additif indénique sulfoné sous forme de sel est comprise dans l'intervalle allant de 0,3 à 2,0% en poids, par rapport au poids du ciment.
